# FASCICULE DE BREVET EUROPEEN

(11) **EP 3 145 795 B1**
(45) Date de publication et mention de la délivrance du brevet: **19.09.2018**
(21) Numéro de dépôt: 15717536.5
(22) Date de dépôt: 10.03.2015
(51) Int. Cl.: B62D 25/06, B62D 65/02

(54) **PAVILLON DE TOIT DE VÉHICULE AUTOMOBILE SOUDO-BRASÉ AUX CÔTÉS DE CAISSE**
AN DIE SEITEN DER KAROSSERIE HARTGELÖTETES KRAFTFAHRZEUGDACH
MOTOR VEHICLE ROOF BRAZE WELDED TO THE SIDES OF THE BODY SHELL

(30) Priorité: 20.05.2014 FR 1454497
(43) Date de publication de la demande: 29.03.2017
(73) Titulaire: Renault S.A.S., 92100 Boulogne-Billancourt (FR)
(72) Inventeur: SAM, Thi-Banho, F-78300 Poissy (FR); VERSCHAVE, Christophe, F-91430 Vauhallan (FR); ROUMADNI, Hichame, F-28100 Dreux (FR); TIRADO, Lucio, F-78170 La Celle Saint Cloud (FR)
(86) Numéro de dépôt international: PCT/FR2015/050589
(87) Numéro de publication internationale: WO 2015/177418

(56) Documents cités:
- DE-A1- 10 006 110
- DE-A1- 19 746 165
- US-A1- 2005 140 158
- US-A1- 2012 061 998

## Description

### Domaine technique de l'invention

L'invention concerne un agencement pour toit de véhicule automobile, comprenant un pavillon en aluminium ou en alliage d'aluminium ayant ses deux bords longitudinaux fixés à deux côtés de caisse droite et gauche.

L'invention a pour objet également un procédé d'assemblage d'un toit de véhicule automobile.

### État de la technique

La tendance actuelle dans le domaine automobile est de réussir à alléger le plus possible le véhicule, notamment pour des raisons économiques et environnementales, tout en répondant au cahier des charges qui concerne la capacité de résistance aux chocs et la sécurité de manière plus générale.

Dans cette optique, l'aluminium est de plus en plus utilisé pour la conception de la structure de la caisse du véhicule. Il s'agit en effet d'une matière offrant un allégement important par rapport à l'acier, pour un coût de matière raisonnable. En particulier, cette matière à base d'aluminium ou d'alliage d'aluminium peut être utilisée pour la fabrication du pavillon du toit du véhicule.

Mais l'utilisation d'une telle matière implique des problèmes et limitations. Elle impose notamment certaines contraintes techniques au niveau de la conception du pavillon, notamment au sujet de sa forme, du procédé de mise en forme du pavillon et de la technique d'assemblage aux autres éléments de la caisse, en particulier les côtés de caisse gauche et droit qui, quant à eux, sont fréquemment en acier.
A titre d'exemple, les documents EP1845013, FR2867740, JP2012214112, US8211251 et US8424961 décrivent l'utilisation d'un pavillon à base d'aluminium assemblé aux côtés de caisse par collage.
Le document US 2012/061998 A1 divulgue un agencement pour toit de véhicule automobile, comprenant un pavillon en aluminium ayant deux bords longitudinaux chacun relié à un côté de caisse correspondant le long d'une zone de raccord orientée longitudinalement et obtenue par rivet et collage, le pavillon délimitant à proximité de chaque bord longitudinal correspondante, une paroi de toit agencée sur sensiblement toute la longueur du pavillon et conformée de sorte à absorber les effets thermiques générant la déformation du pavillon liées au passage du toit dans un four de peinture, le pavillon comprenant aussi des nervures longitudinales.

### Objet de l'invention

Le but de la présente invention est de proposer un agencement pour toit de véhicule automobile qui remédie aux inconvénients listés ci-dessus. Notamment, un objet de l'invention est de fournir un tel agencement qui permette une liberté de conception du pavillon, une facilité de fabrication du pavillon notamment au sujet de sa mise en forme, une qualité et une précision d'assemblage aux côtés de caisse tout en préservant l'esthétisme de l'agencement après l'assemblage et éventuellement la cataphorèse.
Cet objet peut être atteint par l'intermédiaire d'un agencement pour toit de véhicule automobile, comprenant un pavillon en aluminium ou en alliage d'aluminium ayant deux bords longitudinaux chacun soudo-brasé à un côté de caisse correspondant le long d'une zone de raccord orientée longitudinalement et obtenue par soudo-brasage, le pavillon délimitant à proximité de chaque bord longitudinal une nervure longitudinale associée à la zone de raccord correspondante, décalée latéralement par rapport à la zone de raccord associée suivant la largeur du pavillon en direction de l'autre bord longitudinal du pavillon, agencée sur sensiblement toute la longueur du pavillon et conformée en forme de creux de sorte à absorber les effets thermiques générant la déformation du pavillon liées au soudo-brasage de la zone de raccord associée.

Selon un mode de réalisation particulier, chaque nervure longitudinale est un embouti formé dans l'épaisseur transversale de la tôle dans laquelle le pavillon est formé.
Selon un autre mode de réalisation particulier, chaque nervure longitudinale délimite, à la surface extérieure du pavillon destinée à être orientée transversalement du côté opposé à l'habitacle du véhicule, une rainure orientée longitudinalement. La profondeur transversale de la rainure peut être comprise entre 3,5 mm et 6,5 mm, préférentiellement égale à 5 mm.
Il peut être prévu que, pour chaque nervure longitudinale, la distance latérale séparant la zone de raccord associée à cette nervure longitudinale et le bord longitudinal de la rainure délimitée par cette nervure longitudinale le plus proche latéralement de la zone de raccord associée est comprise entre 18 mm et 50 mm.
Selon un mode de réalisation particulier, la rainure délimitée par chaque nervure longitudinale présente une section de coupe ayant un profil de forme courbe entre le bord longitudinal de ladite rainure latéralement le plus proche de la zone de raccord associée et le bord longitudinal de ladite rainure latéralement le plus éloigné de la zone de raccord associée.
La rainure délimitée par chaque nervure longitudinale peut présenter un fond plat.

Un véhicule automobile peut comprendre un tel agencement pour toit.

L'objet de l'invention peut aussi être atteint par l'intermédiaire d'un procédé d'assemblage d'un toit de véhicule automobile, comprenant une étape de fourniture d'un pavillon et d'au moins un côté de caisse destinés à être assemblés pour constituer un tel agencement pour toit de véhicule automobile et une étape de liaison d'un bord longitudinal dudit pavillon audit côté de caisse par soudo-brasage, notamment exclusivement par soudo-brasage, le long d'une zone de raccord résultant dudit soudo-brasage orientée longitudinalement, permettant de fournir ledit agencement à l'issue de ladite étape de liaison, la nervure longitudinale associée à la zone de raccord absorbant les effets thermiques générant la déformation du pavillon durant ledit soudo-brasage.

Selon un mode de réalisation particulier, le procédé comprend, durant l'étape de liaison, une étape d'application d'un effort de rapprochement du pavillon et du côté de caisse à proximité de la zone de raccord, ledit effort étant sensiblement transversal au pavillon.

L'effort de rapprochement appliqué peut se déplacer le long de la zone de raccord au fur et à mesure de la progression de déplacement du soudo-brasage le long de la zone de raccord.

Selon un mode de réalisation particulier, le matériau du fil d'apport utilisé pour l'étape de liaison par soudo-brasage est choisi parmi AlSi₃Mn₁ et AlSi₁₂.

Le faisceau laser utilisé pour l'étape de liaison par soudo-brasage peut présenter une première inclinaison par rapport à la verticale comprise entre 8 et 12 degrés autour de la direction longitudinale d'orientation de la zone de raccord, dans un sens allant vers le côté de caisse, et/ou une deuxième inclinaison par rapport à la verticale comprise entre 0 et 10 degrés autour de la direction latérale perpendiculaire à la direction longitudinale d'orientation de la zone de raccord, dans un sens opposé au sens de déplacement du soudo-brasage le long de la zone de raccord.

Selon encore un autre mode de réalisation particulier, le faisceau laser utilisé pour l'étape de liaison par soudo-brasage présente un décalage latéral par rapport au fil d'apport du côté du côté de caisse par rapport à la zone de raccord, suivant la direction latérale perpendiculaire à la direction longitudinale d'orientation de la zone de raccord et dans le sens de la nervure longitudinale par rapport à la zone de raccord.

Durant l'étape de liaison par soudo-brasage, la tête d'émission du faisceau laser peut être guidée par le fil d'apport et/ou par un doigt de guidage positionné dans la nervure longitudinale durant le soudo-brasage.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une section de coupe longitudinale d'un exemple d'agencement selon l'invention,
- les figures 2 et 3 illustrent deux exemples de pavillon, vus localement en coupe longitudinale,
- la figure 4 est une vue de dessus d'une caisse de véhicule automobile incluant un agencement,
- les figures 5 à 7 sont différentes vues du procédé d'assemblage.

### Description de modes préférentiels de l'invention

La description qui va suivre est faite en référence à un repère orthonormé (X, Y, Z) associé classiquement à un véhicule automobile, dans lequel X est la direction longitudinale horizontale avant-arrière du véhicule, Y est la direction transversale droite-gauche qui est horizontale et perpendiculaire à X, et Z est la direction transversale conjointement perpendiculaire aux directions X et Y, communément nommée direction verticale.

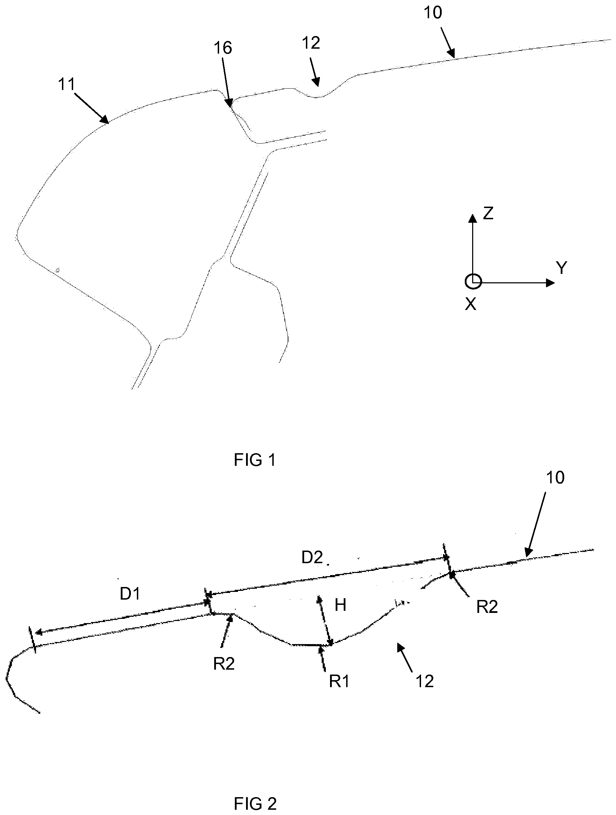

L'invention qui va être décrite en référence aux figures 1 à 7 concerne un agencement pour toit de véhicule automobile, comprenant un pavillon 10 en aluminium ou en alliage d'aluminium. Le pavillon 10 comprend deux bords longitudinaux sensiblement orientés selon X, mais pouvant potentiellement présenter des inflexions (ou courbures) selon Y et/ou selon Z le long de leur longueur. Chaque bord longitudinal comprend un côté de pavillon délimitant une partie d'extrémité latérale du pavillon qui est courbée. Chaque bord longitudinal est très avantageusement soudo-brasé à un côté de caisse 11 correspondant via la partie d'extrémité courbée. Les deux côtés latéraux de caisse délimitent des rampes inclinées de fixation formant des portions droites d'inclinaison opposée par rapport à un pan d'axe Y-Z, en ce sens que chaque portion droite d'inclinaison s'étend selon l'axe Z, du bas vers le haut, de l'intérieur vers l'extérieur du véhicule selon un pan d'axe Y-Z. Autrement dit, le bord longitudinal du pavillon 10 droit est soudo-brasé au côté de caisse 11 droit et le bord longitudinal gauche du pavillon 10 est soudo-brasé au côté de caisse 11 gauche. Pour chaque bord longitudinal du pavillon 10, la fixation au côté de caisse 11 est réalisée le long d'une zone de raccord 16 orientée longitudinalement selon X et obtenue par soudo-brasage. Chaque zone de raccord 16 est formée par l'appui linéaire d'une partie courbée d'extrémité latérale du pavillon sur la portion droite associée d'un côté de caisse, comme cela est rendu visible sur les figures 1, 5 et 6. Compte tenu de la forme courbée des côtés de pavillon, l'agencement de ce dernier sur les côtés 11 de caisse s'effectue selon des appuis linéaires latéraux obtenus par une disposition tangentielle de chaque parties courbées du pavillon sur les portions droites de fixation de chaque côté de caisse.

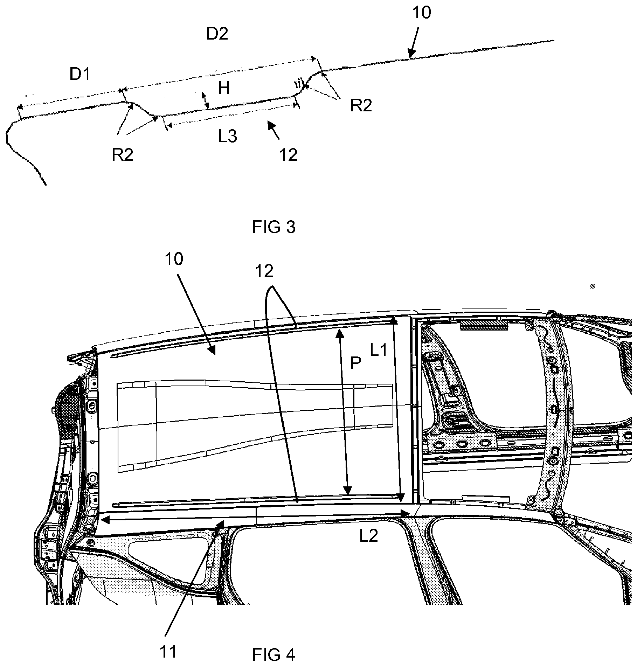

Selon une caractéristique importante, le pavillon 10 délimite, à proximité de chacun de ses deux bords longitudinaux, une nervure longitudinale 12 associée à la zone de raccord 16 correspondante. Autrement dit, le pavillon 10 délimite deux telles nervures longitudinales 12 : une nervure longitudinale 12 droite agencée à proximité du bord longitudinal droit du pavillon 10 et associée à la zone de raccord 16 au côté de caisse 11 droit et une autre nervure longitudinale 12 gauche agencée à proximité du bord longitudinal gauche du pavillon 10 et associée à la zone de raccord 16 au côté de caisse 11 gauche. Les deux nervures longitudinales 12 sont décalées latéralement, c'est-à-dire selon Y, entre elles selon une distance P (figure 4).

Au niveau de chaque bord longitudinal du pavillon 10, la nervure longitudinale 12 est décalée latéralement selon Y par rapport à la zone de raccord qui lui est associée. Ce décalage, noté D1 sur les figures 2 et 3, s'étendant depuis une partie d'extrémité courbée latérale du pavillon, est présent suivant la largeur du pavillon 10 (notée L1 sur la figure 4) comptée selon Y et est orienté en direction de l'autre bord longitudinal du pavillon 10. La nervure longitudinale 12 est agencée sur sensiblement toute la longueur du pavillon 10 (notée L2 sur la figure 4) comptée selon X. Chaque nervure longitudinale 12 est très avantageusement conformée, par une adaptation de sa forme vue en coupe, par sa profondeur H, par sa largeur notée D2 sur les figures 2 et 3, de sorte à absorber les contraintes mécaniques de déformation du pavillon 10 liées au soudo-brasage de la zone de raccord 16 associée.

La nervure longitudinale 12 est localisée sur la partie sommitale du pavillon en ce sens qu'elle est rendue visible depuis l'extérieur du véhicule. Une telle nervure longitudinale 12 s'étend à distance du côté de caisse 11, selon une direction transversale Y au véhicule.

Vue de côté, le côté de caisse 11 du véhicule peut masquer la présence de la nervure longitudinale 12 associée du fait qu'une partie d'extrémité sommitale du côté de caisse 11 s'étend au-dessus de la nervure selon un plan d'axes X-Y.
Il convient de préciser que la valeur locale de la longueur L2 du pavillon 10 peut varier en se déplaçant suivant la direction Y. De même, la valeur locale de la largeur L1 du pavillon 10 peut varier en se déplaçant suivant la direction X. Le pavillon 10, en vue de dessus, peut en effet adopter une forme différente d'un rectangle. Il peut également présenter une forme spatiale non globalement plane, mais plutôt globalement galbé spatialement.

Cette solution permet, par l'utilisation de la technique de soudo-brasage, d'offrir un assemblage de grande qualité, offrant toute la précision requise et la facilité d'exécution, entre un tel pavillon 10 à base d'aluminium et les côtés de caisse 11 en acier. En outre, elle permet de limiter les coûts financiers liés aux formes de ces éléments et le poids de l'agencement : la réduction de masse est de l'ordre de 45% par rapport à un pavillon identique en acier. Les nervures longitudinales 12 permettent de pallier aux risques de déformations thermiques peu esthétiques qui seraient sinon susceptibles de se produire à la surface du pavillon dans un tel contexte de soudo-brasage, mais également ensuite durant l'étape de cataphorèse de l'agencement.

Par « nervure », il est entendu de préférence qu'il s'agit d'une conformation du pavillon 10 présentant une section longitudinale, c'est-à-dire vue dans un plan de coupe (Y, Z) latéral-transversal, en forme de creux, par exemple en forme de U (figure 3), en forme de V, en forme arrondie de manière générale (figure 2).

La zone de raccord 16 est notamment de forme linéaire en ce sens qu'elle peut adopter une forme de ligne, globalement orientée longitudinalement selon X dans le même sens que l'orientation du bord longitudinal concerné du pavillon 10, potentiellement incluant un galbe selon autour de Y et/ou autour de Z en se déplaçant le long de X.

Dans un mode de réalisation, chaque nervure longitudinale 12 est un embouti formé dans l'épaisseur transversale de la tôle dans laquelle le pavillon 10 est formé.

Avantageusement, chaque nervure longitudinale 12 délimite, à la surface extérieure du pavillon 10 destinée à être orientée transversalement selon Z du côté opposé à l'habitacle du véhicule, une rainure orientée longitudinalement. La nervure longitudinale 12 est ainsi rendue visible de l'extérieure du véhicule. Le terme « rainure » est de préférence interprété comme signifiant un élément creux long, étroit et régulier à la surface extérieure du pavillon 10.

Des simulations numériques et des essais ont permis de montrer que la profondeur H transversale de la rainure comprise entre 3,5 mm et 6,5 mm donnait d'excellents résultats, préférentiellement égale à 5 mm. De même, pour chaque nervure longitudinale 12, la distance D1 latérale séparant la zone de raccord 16 associée à cette nervure longitudinale 12 et le bord longitudinal de la rainure délimitée par cette nervure longitudinale 12 le plus proche latéralement de la zone de raccord 16 associée est préférentiellement comprise entre 18 mm et 50 mm maximum.

Dans la variante de la figure 2, la rainure délimitée par chaque nervure longitudinale 12 présente une section de coupe ayant un profil de forme courbe selon un rayon noté R1, par exemple compris entre 7 mm et 9 mm et préférentiellement égal à 8 mm, entre le bord longitudinal de cette rainure latéralement le plus proche de la zone de raccord 16 associée et le bord longitudinal de cette rainure latéralement le plus éloigné de la zone de raccord 16 associée. La largeur D2 de la rainure comptée selon Y est quant à elle égale ou supérieure à 23 mm. Chaque bord longitudinal de la rainure peut présenter un congé de raccordement (noté R2) au reste du pavillon ayant une valeur par exemple supérieure ou égale à 4 mm.

Dans la variante de la figure 3, la rainure délimitée par chaque nervure longitudinale 12 présente un fond plat ayant une largeur notée L3 comptée suivant Y supérieure ou égale à 20 mm. La largeur D2 de la rainure comptée selon Y est quant à elle égale ou supérieure à 31 mm. Chaque bord longitudinal de la rainure peut présenter un congé de raccordement (noté R2) au reste du pavillon ayant une valeur par exemple supérieure ou égale à 4 mm.

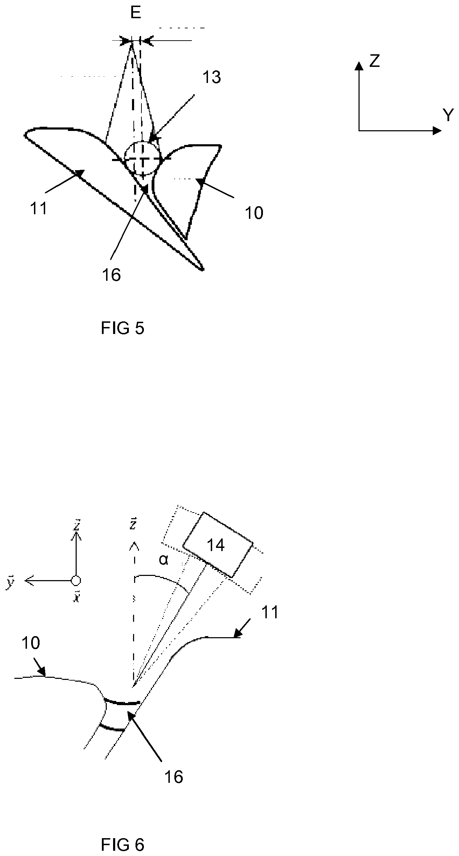

En référence maintenant aux figures 5 à 7, le procédé d'assemblage d'un toit de véhicule automobile comprendra une étape de fourniture d'un pavillon 10 en aluminium ou en alliage d'aluminium et d'au moins un côté de caisse 11, tous deux destinés à être assemblés pour constituer un tel agencement pour toit de véhicule automobile. Les côtés de caisse 11 comprennent des portions droites d'inclinaisons opposées qui selon une vue en coupe transversale définit une surface d'appui conique contre laquelle les parties courbées d'extrémités latérales du pavillon viennent en appui, respectivement deux appuis linéaires, réalisant ainsi un auto-centrage du pavillon 10 sur les côtés de caisse 11. Puis une étape de liaison d'un bord longitudinal de ce pavillon 10 au côté de caisse 11 est mise en oeuvre par soudo-brasage, notamment exclusivement par soudo-brasage pour éviter toute nécessité d'une opération de collage.

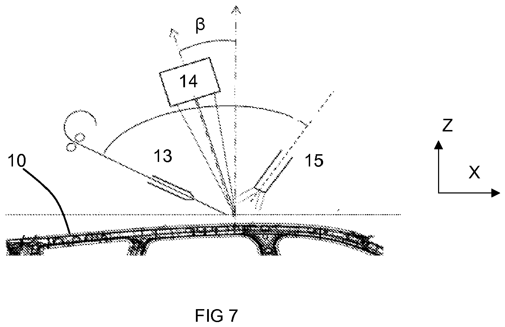

Il s'agit d'une combinaison bien connue de l'Homme du Métier, à savoir un assemblage utilisant un faisceau laser émis par la tête 14 et utilisant un fil d'apport 13 de matière. Le soudo-brasage peut aussi nécessiter un apport de gaz 15 (figure 7). Cela permet avantageusement de favoriser et de protéger le bain de fusion pour optimiser la liaison entre le pavillon et le côté de caisse. Le matériau du fil d'apport utilisé pour l'étape de liaison par soudo-brasage pourra notamment être choisi parmi AlSi₃Mn₁ et AlSi₁₂, ce qui donne d'excellents résultats. De manière générale, toute technique de soudo-brasage connue de l'Homme du Métier, combinant l'utilisation d'un faisceau laser et d'un fil 13 d'apport de matière, pourra être utilisée. L'Homme du Métier saura adapter au cas par cas les paramètres techniques à implémenter, en fonction de la nature des matériaux, de leurs épaisseurs, etc.

L'étape de liaison par soudo-brasage est réalisée le long de la zone de raccord 16 résultant de ce soudo-brasage. La zone de raccord 16 est orientée longitudinalement, permettant de fournir l'agencement décrit précédemment, à l'issue de cette étape de liaison. La nervure longitudinale 12 associée à la zone de raccord 16 absorbe les effets thermiques générant la déformation du pavillon 10 durant ce soudo-brasage mais aussi ultérieurement durant l'étape de cataphorèse de l'agencement. La zone de raccord 16 sera avantageusement linéaire suivant la longueur L2 du pavillon 10, de sorte à ne pas être discontinue ni même surfacique.

L'étape de fourniture du pavillon 10 peut comprendre une étape d'emboutissage d'une tôle d'une manière permettant d'aboutir, après emboutissage, à la forme du pavillon 10. Toutefois, toute autre technique préalable à son assemblage pourra être implémentée pour la fabrication du pavillon 10. Dans un mode de réalisation, chaque nervure longitudinale 12 est également obtenue par un emboutissage formé dans l'épaisseur transversale de la tôle dans laquelle le pavillon 10 est formé, simultanément ou en deux temps.

Le procédé d'assemblage peut comprendre, durant l'étape de liaison, une étape d'application d'un effort de rapprochement du pavillon 10 et du côté de caisse 11 entre eux. Cet effort de rapprochement est appliqué à proximité de la zone de raccord 16 et est sensiblement transversal au pavillon 10. Dans un mode d'exécution particulier, l'effort de rapprochement appliqué se déplacera le long de la zone de raccord 16 au fur et à mesure de la progression de déplacement du soudo-brasage le long de la zone de raccord 16. A titre d'exemple, les enseignements du document EP2134503A1 pourront être reproduits.

Le faisceau laser utilisé pour l'étape de liaison par soudo-brasage, émis par la tête 14, présente :
- une première inclinaison α (figure 6) par rapport à la verticale, comprise entre 8 et 12 degrés autour de la direction longitudinale d'orientation de la zone de raccord 16, dans un sens allant vers le côté de caisse 11,
- et/ou une deuxième inclinaison β (figure 7) par rapport à la verticale, comprise entre 0 et 10 degrés autour de la direction latérale perpendiculaire à la direction longitudinale d'orientation de la zone de raccord 16, dans le sens de déplacement du soudo-brasage le long de la zone de raccord 16.

En référence à la figure 5, le faisceau laser utilisé pour l'étape de liaison par soudo-brasage peut aussi présenter un décalage latéral E par rapport au fil d'apport 13 par rapport à la zone de raccord 16, suivant la direction latérale perpendiculaire à la direction longitudinale d'orientation de la zone de raccord 16. En fonction de la nature du fil d'apport, le décalage E peut être implémenté soit du côté du côté de caisse 11 et dans un sens opposé à la nervure longitudinale 12 par rapport à la zone de raccord 16, soit du côté du pavillon. Un avantage du décalage latéral E est de permettre un très bon chauffage de l'acier ; le brasage se pratique sur le côté de caisse en acier et le soudage sur le pavillon en aluminium.

Dans un mode d'exécution particulier, durant l'étape de liaison par soudo-brasage, la tête 14 d'émission du faisceau laser est guidée par le fil d'apport 13 et/ou par un doigt de guidage (non représenté) positionné dans la nervure longitudinale 12 durant le soudo-brasage.

L'invention porte aussi sur un véhicule automobile comprenant un tel agencement pour toit.

Les avantages de la solution précédemment décrite sont de permettre une liberté de conception du pavillon 10, une facilité de fabrication du pavillon 10 notamment au sujet de sa mise en forme, une qualité et une précision d'assemblage aux côtés de caisse 11 tout en préservant l'esthétisme de l'agencement après l'assemblage et après l'opération de cataphorèse.

## Revendications

1. Agencement pour toit de véhicule automobile, comprenant un pavillon (10) en aluminium ou en alliage d'aluminium ayant deux bords longitudinaux chacun soudo-brasé à un côté de caisse (11) correspondant le long d'une zone de raccord (16) orientée longitudinalement et obtenue par soudo-brasage, le pavillon (10) délimitant à proximité de chaque bord longitudinal une nervure longitudinale (12) associée à la zone de raccord (16) correspondante, décalée (D1) latéralement par rapport à la zone de raccord (16) associée suivant la largeur (L1) du pavillon (10) en direction de l'autre bord longitudinal du pavillon (10), agencée sur sensiblement toute la longueur (L2) du pavillon (10) et conformée en forme de creux de sorte à absorber les effets thermiques générant la déformation du pavillon (10) liées au soudo-brasage de la zone de raccord (16) associée.

2. Agencement selon la revendication 1, **caractérisé en ce que** chaque nervure longitudinale (12) est un embouti formé dans l'épaisseur transversale de la tôle dans laquelle le pavillon (10) est formé.

3. Agencement selon l'une des revendications 1 ou 2, **caractérisé en ce que** chaque nervure longitudinale (12) délimite, à la surface extérieure du pavillon (10) destinée à être orientée transversalement du côté opposé à l'habitacle du véhicule, une rainure orientée longitudinalement.

4. Agencement selon la revendication 3, **caractérisé en ce que** la profondeur (H) transversale de la rainure est comprise entre 3,5 mm et 6,5 mm, préférentiellement égale à 5 mm.

5. Agencement selon l'une des revendications 3 ou 4, **caractérisé en ce que**, pour chaque nervure longitudinale (12), la distance (D1) latérale séparant la zone de raccord (16) associée à cette nervure longitudinale (12) et le bord longitudinal de la rainure délimitée par cette nervure longitudinale (12) le plus proche latéralement de la zone de raccord (16) associée est comprise entre 18 mm et 50 mm.

6. Agencement selon l'une des revendications 3 à 5, **caractérisé en ce que** la rainure délimitée par chaque nervure longitudinale (12) présente une section de coupe ayant un profil de forme courbe (R1) entre le bord longitudinal de ladite rainure latéralement le plus proche de la zone de raccord (16) associée et le bord longitudinal de ladite rainure latéralement le plus éloigné de la zone de raccord (16) associée.

7. Agencement selon l'une des revendications 3 à 6, **caractérisé en ce que** la rainure délimitée par chaque nervure longitudinale (12) présente un fond plat.

8. Véhicule automobile comprenant un agencement pour toit selon l'une quelconque des revendications précédentes.

9. Procédé d'assemblage d'un toit de véhicule automobile, comprenant une étape de fourniture d'un pavillon (10) et d'au moins un côté de caisse (11) destinés à être assemblés pour constituer un agencement pour toit de véhicule automobile selon l'une quelconque des revendications 1 à 7 et une étape de liaison d'un bord longitudinal dudit pavillon (10) audit côté de caisse (11) par soudo-brasage, notamment exclusivement par soudo-brasage, le long d'une zone de raccord (16) résultant dudit soudo-brasage orientée longitudinalement, permettant de fournir ledit agencement à l'issue de ladite étape de liaison, la nervure longitudinale (12) associée à la zone de raccord (16) absorbant les effets thermiques générant la déformation du pavillon (10) durant ledit soudo-brasage.

10. Procédé d'assemblage selon la revendication 9, **caractérisé en ce qu'**il comprend, durant l'étape de liaison, une étape d'application d'un effort de rapprochement du pavillon (10) et du côté de caisse (11) à proximité de la zone de raccord (16), ledit effort étant sensiblement transversal au pavillon (10).

11. Procédé d'assemblage selon la revendication 10, **caractérisé en ce que** l'effort de rapprochement appliqué se déplace le long de la zone de raccord (16) au fur et à mesure de la progression de déplacement du soudo-brasage le long de la zone de raccord (16).

12. Procédé d'assemblage selon l'une des revendications 9 à 11, **caractérisé en ce que** le matériau du fil d'apport (13) utilisé pour l'étape de liaison par soudo-brasage est choisi parmi AlSi₃Mn₁ et AlSi₁₂.

13. Procédé d'assemblage selon l'une des revendications 9 à 12, **caractérisé en ce que** le faisceau laser utilisé pour l'étape de liaison par soudo-brasage présente une première inclinaison (α) par rapport à la verticale comprise entre 8 et 12 degrés autour de la direction longitudinale (X) d'orientation de la zone de raccord (16), dans un sens allant vers le côté de caisse (11), et/ou une deuxième inclinaison (β) par rapport à la verticale comprise entre 0 et 10 degrés autour de la direction latérale (Y) perpendiculaire à la direction longitudinale (X) d'orientation de la zone de raccord (16), dans un sens opposé au sens de déplacement du soudo-brasage le long de la zone de raccord (16).

14. Procédé d'assemblage selon l'une des revendications 9 à 13, **caractérisé en ce que** le faisceau laser utilisé pour l'étape de liaison par soudo-brasage présente un décalage latéral (E) par rapport au fil d'apport (13) du côté du côté de caisse (11) par rapport à la zone de raccord (16), suivant la direction latérale (Y) perpendiculaire à la direction longitudinale (X) d'orientation de la zone de raccord (16) et dans le sens de la nervure longitudinale (12) par rapport à la zone de raccord (16).

15. Procédé d'assemblage selon l'une des revendications 9 à 14, **caractérisé en ce que** durant l'étape de liaison par soudo-brasage, la tête (14) d'émission du faisceau laser est guidée par le fil d'apport (13) et/ou par un doigt de guidage positionné dans la nervure longitudinale (12) durant le soudo-brasage.

## Patentansprüche

1. Anordnung für ein Kraftfahrzeugdach, umfassend ein Dach (10) aus Aluminium oder einer Aluminiumlegierung mit zwei Längsrändern, die jeweils an eine entsprechende Karosserieseite (11) entlang einer Verbindungszone (16), die längs ausgerichtet und durch Hartlöten hergestellt ist, hartgelötet sind, wobei das Dach (10) in der Nähe jedes Längsrandes eine Längsrippe (12), die der entsprechenden Verbindungszone (16) zugeordnet ist, begrenzt, die seitlich in Bezug zur zugehörigen Verbindungszone (16) entlang der Breite (L1) des Daches (10) in Richtung des anderen Längsrandes des Daches (10) versetzt ist (D1), auf im Wesentlichen der gesamten Länge (L2) des Daches (10) angeordnet und hohl ausgeführt ist, um die Wärmeeffekte, die die Verformung des Daches (10) erzeugen, die mit dem Hartlöten der zugehörigen Verbindungszone (16) zusammenhängen, zu absorbieren.

2. Anordnung nach Anspruch 1, **dadurch gekennzeichnet, dass** jede Längsrippe (12) eine Einstülpung ist, die in der Querdicke des Blechs ausgebildet ist, in der das Dach (10) ausgebildet ist.

3. Anordnung nach einem der Ansprüche 1 oder 2, **dadurch gekennzeichnet, dass** jede Längsrippe (12) an der Außenseite des Daches (10), die dazu bestimmt ist, quer auf der gegenüberliegenden Seite des Fahrgastraums des Fahrzeugs ausgerichtet zu sein, eine längs ausgerichtete Nut begrenzt.

4. Anordnung nach Anspruch 3, **dadurch gekennzeichnet, dass** die Quertiefe (H) der Nut zwischen 3,5 mm und 6,5 mm beträgt, vorzugsweise gleich 5 mm ist.

5. Anordnung nach einem der Ansprüche 3 oder 4, **dadurch gekennzeichnet, dass** für jede Längsrippe (12) der Seitenabstand (D1), der die dieser Längsrippe (12) zugeordnete Verbindungszone (16) und den Längsrand der Nut, die von dieser seitlich nächsten Längsrippe (12) zu der zugeordneten Verbindungszone (16) trennt, zwischen 18 mm und 50 mm beträgt.

6. Anordnung nach einem der Ansprüche 3 bis 5, **dadurch gekennzeichnet, dass** die von jeder Längsrippe (12) begrenzte Nut einen Querschnitt mit einem kurvenförmigen Profil (R1) zwischen dem Längsrand der seitlich nächsten Längsrippe zu der zugeordneten Verbindungszone (16) und dem Längsrand der seitlich am weitesten von der zugeordneten Verbindungszone (16) entfernten Nut aufweist.

7. Anordnung nach einem der Ansprüche 3 bis 6, **dadurch gekennzeichnet, dass** die von jeder Längsrippe (12) begrenze Nut einen flachen Boden aufweist.

8. Kraftfahrzeug, umfassend eine Dachanordnung nach einem der vorhergehenden Ansprüche.

9. Verfahren zur Montage eines Kraftfahrzeugdaches, umfassend einen Schritt der Bereitstellung eines Daches (10) und mindestens einer Karosserieseite (11), die dazu bestimmt sind, zusammengefügt zu werden, um eine Anordnung für ein Kraftfahrzeugdach nach einem der Ansprüche 1 bis 7 darzustellen, und einen Schritt der Verbindung eines Längsrades des Daches (10) mit der Karosserieseite (11) durch Hartlöten, insbesondere ausschließlich durch Hartlöten, entlang einer Verbindungszone (16), die sich aus dem längs gerichteten Hartlöten ergibt, der es ermöglicht, die Anordnung nach dem Verbindungsschritt zu liefern, wobei die der Verbindungszone (16) zugeordnete Längsrippe (12) die Wärmeeffekte, die die Verformung des Daches (10) während des Hartlötens erzeugen, absorbiert.

10. Montageverfahren nach Anspruch 9, **dadurch gekennzeichnet, dass** es während des Verbindungsschrittes einen Schritt des Anlegens einer Kraft der Annäherung des Daches (10) und der Karosserieseite (11) in die Nähe der Verbindungszone (16), wobei die Kraft im Wesentlichen quer zum Dach (10) gerichtet ist.

11. Montageverfahren nach Anspruch 10, **dadurch gekennzeichnet, dass** sich die angelegte Annäherungskraft entlang der Verbindungszone (16) im Zuge der fortschreitenden Verlagerung des Hartlötens entlang der Verbindungszone (16) verlagert.

12. Montageverfahren nach einem der Ansprüche 9 bis 11, **dadurch gekennzeichnet, dass** das Material des Lötdrahtes (13), der für den Verbindungsschritt durch Hartlöten verwendet wird, unter AlSi₃Mn₁ und AlSi₁₂ ausgewählt ist.

13. Montageverfahren nach einem der Ansprüche 9 bis 12, **dadurch gekennzeichnet, dass** der für den Verbindungsschritt durch Hartlöten verwendete Laserstrahl eine erste Neigung (α) zur Vertikalen zwischen 8 und 12 Grad um die Längsrichtung (X) der Ausrichtung der Verbindungszone (16) in eine Richtung zu der Karosserieseite (11) hin aufweist, und/oder eine zweiten Neigung (β) zur vertikalen zwischen 0 und 10 Grad um die seitliche Richtung (Y) senkrecht auf die Längsrichtung (X) der Ausrichtung der Verbindungszone (16) in eine zu der Verlagerungsrichtung des Hartlötens entlang der Verbindungszone (16) entgegengesetzte Richtung aufweist.

14. Montageverfahren nach einem der Ansprüche 9 bis 13, **dadurch gekennzeichnet, dass** der für den Verbindungsschritt durch Hartlöten verwendete Laserstrahl einen seitlichen Versatz (E) zum Lötdraht (13) auf der Seite der Karosserieseite (11) in Bezug zur Verbindungszone (16) entlang der seitlichen Richtung (Y) senkrecht auf die Längsrichtung (X) der Ausrichtung der Verbindungszone (16) und in die Richtung der Längsrippe (12) in Bezug zur Verbindungszone (16) aufweist.

15. Montageverfahren nach einem der Ansprüche 9 bis 14, **dadurch gekennzeichnet, dass** während des Verbindungsschrittes durch Hartlöten der Sendekopf (14) des Laserstrahls durch den Lötdraht (13) und/oder durch einen Führungsfinger, der in der Längsrippe (12) angeordnet ist, während des Hartlötens geführt wird.

## Claims

1. Arrangement for a motor vehicle roof, comprising a roof panel (10) made of aluminum or an aluminum alloy having two longitudinal edges that are each braze-welded to a corresponding body shell side (11) along a longitudinally oriented connecting zone (16) obtained by braze-welding, the roof panel (10) delimiting, in the vicinity of each longitudinal edge, a longitudinal rib (12) that is associated with the corresponding connecting zone (16), is offset (D1) laterally with respect to the associated connecting zone (16) across the width (L1) of the roof panel (10) in the direction of the other longitudinal edge of the roof panel (10), is arranged along substantially the entire length (L2) of the roof panel (10), and has a recessed shape so as to absorb the thermal effects generating the deformation of the roof panel (10) that are linked to the braze-welding of the associated connecting zone (16) .

2. Arrangement according to Claim 1, **characterized in that** each longitudinal rib (12) is a pressing formed in the transverse thickness of the metal sheet from which the roof panel (10) is formed.

3. Arrangement according to either of Claims 1 and 2, **characterized in that** each longitudinal rib (12) delimits a longitudinally oriented groove at the outer surface of the roof panel (10) that is intended to be oriented transversely away from the passenger compartment of the vehicle.

4. Arrangement according to Claim 3, **characterized in that** the transverse depth (H) of the groove is between 3.5 mm and 6.5 mm, and preferably equal to 5 mm.

5. Arrangement according to either of Claims 3 and 4, **characterized in that**, for each longitudinal rib (12), the lateral distance (D1) between the connecting zone (16) associated with this longitudinal rib (12) and the longitudinal edge, laterally closest to the associated connecting zone (16), of the groove delimited by this longitudinal rib (12) is between 18 mm and 50 mm.

6. Arrangement according to one of Claims 3 to 5, **characterized in that** the groove delimited by each longitudinal rib (12) has a cross section having a curved profile (R1) between the longitudinal edge, laterally closest to the associated connecting zone (16), of said groove and the longitudinal edge, laterally farthest away from the associated connecting zone (16), of said groove.

7. Arrangement according to one of Claims 3 to 6, **characterized in that** the groove delimited by each longitudinal rib (12) has a flat bottom.

8. Motor vehicle comprising an arrangement for a roof according to any one of the preceding claims.

9. Method for fitting a motor vehicle roof, comprising a step of providing a roof panel (10) and at least one body shell side (11) which are intended to be joined together to form an arrangement for a motor vehicle roof according to any one of Claims 1 to 7, and a step of connecting a longitudinal edge of said roof panel (10) to said body shell side (11) by braze-welding, notably exclusively by braze-welding, along a longitudinally oriented connecting zone (16) resulting from said braze-welding, making it possible to provide said arrangement following said connecting step, the longitudinal rib (12) associated with the connecting zone (16) absorbing the thermal effects generating the deformation of the roof panel (10) during said braze-welding.

10. Fitting method according to Claim 9, **characterized in that** it comprises, during the connecting step, a step of applying a force for moving the roof panel (10) and the body shell side (11) together in the vicinity of the connecting zone (16), said force being substantially transverse to the roof panel (10).

11. Fitting method according to Claim 10, **characterized in that** the moving-together force applied travels along the connecting zone (16) while the braze-welding travels along the connecting zone (16).

12. Fitting method according to one of Claims 9 to 11, **characterized in that** the material of the filler wire (13) used for the step of connecting by braze-welding is selected from AlSi₃Mn₁ and AlSi₁₂.

13. Fitting method according to one of Claims 9 to 12, **characterized in that** the laser beam used for the step of connecting by braze-welding has a first inclination (α) of between 8 and 12 degrees with respect to the vertical about the longitudinal direction (X) of orientation of the connecting zone (16), in a direction running toward the shell body side (11), and/or a second inclination (β) of between 0 and 10 degrees with respect to the vertical about the lateral direction (Y) perpendicular to the longitudinal direction (X) of orientation of the connecting zone (16), in an opposite direction to the direction of travel of the braze-welding along the connecting zone (16).

14. Fitting method according to one of Claims 9 to 13, **characterized in that** the laser beam used for the step of connecting by braze-welding has a lateral offset (E) with respect to the filler wire (13) toward the body shell side (11) with respect to the connecting zone (16), in the lateral direction (Y) perpendicular to the longitudinal direction (X) of orientation of the connecting zone (16) and in the direction of the longitudinal rib (12) with respect to the connecting zone (16).

15. Fitting method according to one of Claims 9 to 14, **characterized in that**, during the step of connecting by braze-welding, the emission head (14) of the laser beam is guided by the filler wire (13) and/or by a guide finger positioned in the longitudinal rib (12) during the braze-welding.
